## Europäisches Patentamt
## European Patent Office
## Office européen des brevets

(19)

(11) Veröffentlichungsnummer: **0 284 013 B1**

(12) **EUROPÄISCHE PATENTSCHRIFT**

(45) Veröffentlichungstag der Patentschrift: **18.12.91**

(21) Anmeldenummer: **88104537.1**

(22) Anmeldetag: **22.03.88**

(51) Int. Cl.5: **C09D 201/00, C09D 5/38, C09D 5/29, C09D 167/00**

(54) **Verfahren zur Herstellung von pigmentierten, lufttrocknenden Metallic-Basislacken, und deren Verwendung.**

(30) Priorität: **26.03.87 DE 3709978**

(43) Veröffentlichungstag der Anmeldung:
**28.09.88 Patentblatt 88/39**

(45) Bekanntmachung des Hinweises auf die Patenterteilung:
**18.12.91 Patentblatt 91/51**

(84) Benannte Vertragsstaaten:
**AT BE CH DE ES FR GB IT LI NL SE**

(56) Entgegenhaltungen:
**EP-A- 0 187 379**
**DE-A- 2 924 632**
**US-A- 4 532 177**

(73) Patentinhaber: **Herberts Gesellschaft mit beschränkter Haftung**
**Christbusch 25**
**W-5600 Wuppertal 2(DE)**

(72) Erfinder: **Stephan, Werner**
**Westfalenweg 169**
**W-5600 Wuppertal 1(DE)**
Erfinder: **Surrey, Bruno**
**Markland 156**
**W-5600 Wuppertal 2(DE)**
Erfinder: **Sadowsi, Fritz, Dr.**
**Am Mühlenacker 35**
**W-5024 Pulheim 2(DE)**

(74) Vertreter: **Türk, Gille, Hrabal**
**Brucknerstrasse 20**
**W-4000 Düsseldorf 13(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein Verfahren zur Herstellung von pigmentierten, lufttrocknenden Metallic-Basislacken durch Abmischen von

A) pulverige Metallplättchen enthaltenden Metallic-Basislacken auf der Grundlage physikalisch trocknender Bindemittel, die übliche lacktechnische Zusatzstoffe enthalten,

B) mehreren Farbpigmente verschiedener Tönung enthaltenden Hochglanz-Mischlacken auf der Grundlage oxidativ trocknender mittelöliger Alkydharzlacke, die gegebenenfalls geringe für derartige Hochglanzlacke übliche lacktechnische Zusatzstoffe enthalten,

sowie die Verwendung der erhaltenen Lacke bei der Reparaturlackierung von Metallgegenständen.

Insbesondere zur Reparaturlackierung von Metallgegenständen, besonders Kraftfahrzeugen oder lackierten Maschinen ist es erforderlich, daß in kleinen Mengen eine Lackmischung hergestellt wird, die in ihrem Farbton genau dem Farbton des zu reparierenden Gegenstandes entsprechen muß. Zur Herstellung solcher Metallic-Basislacke ist es bekannt, daß die oben definierte Komponente A) mit Alkydharzlacken vermischt wird, wobei mehrere Alkydharzlacke mit verschiedenen Farbtönen in solchen Mengenverhältnissen eingesetzt werden, daß der gewünschte Farbton im abgemischen Lack erhalten wird.

Die in der Komponente A) enthaltenen pulverigen Metallplättchen, insbesondere Aluminiumflitter, bewirken den sogenannten Metallic-Effekt der Lacke.

Die Hersteller der Lacke liefern im allgemeinen mehrere Arten von Komponente A), die sich dadurch unterscheiden, daß die pulverigen Metallplättchen eine verschiedene Körnung aufweisen. Die als Komponente A) verwendeten Lacke enthalten keine sonstigen Farbpigmente, sind also sozusagen farblos, abgesehen von dem Metallic-Effekt, der durch die Metallplättchen erzeugt wird. Die gebräuchlichen Metallic-Lackierungen besitzen je nach der Art der in den Lacken enthaltenen Metallplättchen unterschiedliche Metallic-Effekte. Durch das Vermischen von mehreren Komponenten A), enthaltend jeweils verschiedene Arten üblicher pulveriger Metallplättchen, ist es möglich, einen jeweils gewünschten Metallic-Effekt zu erzielen bzw. nachzustellen. Beispielsweise unter Verwendung von ein bis vier verschiedenen Komponanten A), enthaltend jeweils entsprechende verschiedene pulverige Metallplättchen, ist dies nach dem Stand der Technik möglich.

Um einen jeweils gewünschten Farbton zu erzielen oder nachzustellen, muß die Komponente A) mit Alkydharzlacken vermischt werden, die sich durch den Gehalt bestimmter Farbpigmente und die Abwesenheit von pulverigen Metallplättchen auszeichnet. Es ist bekannt, daß die Lackhersteller eine Serie von zahlreichen verschieden gefärbten Alkydharzlacken im Handel vertreiben, aus denen sich der Verbraucher, z.B. der Reparaturlackierer, durch Abmischen nach vorgegebenen Rezepturen jeden gewünschten Farbton herstellen bzw. nachstellen kann. Eine Serie von etwa 30 bis 40 verschieden getönten Alkydharzlacken wird z.B. von mehreren Firmen in diesem Sinne angeboten und eingesetzt.

Derartige Metallic-Basislacke weisen jedoch den lacktechnischen Nachteil auf, daß die Komponente A) und der Alkydharzlack eine unterschiedliche Bindemittelbasis haben, die an sich nicht zur Erzielung eines Lacküberzuges vermischt werden sollten. Die Bindemittelbasis der Komponente A) sind physikalisch trocknende Bindemittel. Bevorzugt handelt es sich hierbei um thermoplastische Polyester- und/oder Acrylharze, wie sie für die Komponente A) üblich ist. Das wesentliche Merkmal dieser Bindemittel ist, daß sie ohne Zusatz weiterer reaktiver Komponenten lufttrocknen. Wenn man einen Lacküberzug nur unter Verwendung der Komponente A) oder eines Gemisches verschiedener Komponenten A), wie oben beschrieben, herstellt, erhält man einen einwandfreien Lacküberzug.

Die Alkydharzkomponente enthält dagegen als Bindemittel ein oxidativ trocknendes Alkydharz. Dieses Alkydharz muß mit Sikkativ vermischt werden. Nach dem Auftrag auf den zu beschichtenden Gegenstand erfolgt dann eine oxidative Trocknung unter Erzielung eines Lacküberzuges. Derartige Alkydharze weisen den Vorteil auf, daß sie handelsüblich sind und bei den Lackierern vorliegen. Sie weisen allerdings verschiedene Nachteile auf. So trocknet das Alkydharzsystem durch Sauerstoffaufnahme sehr langsam, beispielsweise während etwa 16 Stunden bei 20 °C; die Trocknung kann durch Wärme beschleunigt werden, man benötigt aber selbst bei 60 °C immer noch 60 Minuten. Bei der Langzeitbewitterung geht durch das enthaltene Sikkativ die oxidative Trocknung immer weiter und führt schließlich zur Versprödung, zum Mattwerden der ursprünglichen Hochglanzlackierung und zur Rißbildung.

Durch das Vermischen der vorstehend definierten Komponente A) mit dem Alkydharzsystem mit einem Gehalt an Sikkativen treten aufgrund der unterschiedlichen Bindemittel weitere Nachteile hinsichtlich der lacktechnischen Eigenschaften der hergestellten Überzüge auf. Die Mischung der Komponente A) mit den Alkydharz-Sikkativsystemen läßt sich schwer einwandfrei verarbeiten. Es treten starke Veränderungen des Farbtons und des Flops auf. Die gewünschten Farbtöne werden schlecht erzielt, da ein grauer schmutziger Metalleffekt entsteht und eine starke Wolkenbildung auftreten kann. Außerdem treten beim Überspritzen mit Zweikomponenten-Klarlacken Kräuselungen, Hochziehen, weitere Wolkenbildung und Vergrauung des Metalleffekts auf. Darüber hinaus trocknen auch die Mischungen von Komponante A) und Alkydharz-Sikkativsystem sehr langsam; die Trocknung erfordert üblicherweise mehrere Stunden.

Dennoch besteht ein Bedürfnis über Systeme auf der Basis der Komponante A) im Gemisch mit Alkydharzlacken zu verfügen, da die Alkydharzlacke, wie vorstehend erläutert, beim Lackierer zur Verfügung stehen. Lacktechnisch betrachtet wäre es zwar optimal, wenn die Komponente A) zur Bereitung der gewünschten Farbtöne mit einer Pigmentkomponente vermischt werden könnte, die das gleiche Bindemittel wie die Komponante A) enthält, da dann keine Schwierigkeiten auftreten könnten, jedoch stellt es einen großen wirtschaftlichen und lagerungstechnischen Aufwand dar, wenn beim Lackierer außer den bereits vorhandenen Alkydharzkomponenten, die sie für lufttrocknende Lackierungen benötigen, noch weitere Serien von Lacken auf der Bindemittelbasis der Komponante A) mit etwa 30 bis 40 verschiedenen Pigmenten gelagert werden müßten.

Der Erfindung liegt die Aufgabe zugrunde durch Vermischen der vorstehend definierten Komponente A) mit Alkydharzlacken einen Einkomponenten-Lack mit ausgezeichneten lacktechnischen Eigenschaften bereitzustellen, der die vorstehend aufgezeigten Nachteile nicht aufweist.

Diese Aufgabenstellung konnte überraschenderweise dadurch gelöst werden, daß die Komponente A) mit einem Hochglanzmischlack auf der Basis oxidativ trocknender Alkydharz-Bindemittel vermischt wird, die keinen Sikkativzusatz enthalten (im folgenden werden derartige Hochglanzmischlacke als Komponente B) bezeichnet) und daß darüber hinaus als Komponente C) zusätzlich ein Gemisch von in Lösungsmitteln gelösten Celluloseethern und/oder -estern und/oder Polyvinylacetalen und übliche für physikalisch und/oder oxidativ trocknende Lacke verwendeten lacktechnischen Zusatzstoffen zugemischt wird.

Die Verwendung von Celluloseethern und/oder-estern als Zusatz zu Lacken auf der Basis der vorstehend definierten Komponente A) wird zwar in der DE-A-29 24 632 beschrieben, jedoch werden dort als dritte Komponente Lacke auf der Basis von Acrylharzbindemitteln verwendet, die mit Isocyanatgruppen reagierende Wasserstoffatome aufweisen. Der Zusatz von Celluloseethern bzw.-estern zu Lacksystemen auf der Basis oxidativ trocknender Alkydharz-Bindemittel ist jedoch völlig unüblich. Es war nicht zu erwarten, daß eine derartige Abmischung mit der Sikkativfreien Komponente B) und der Komponente A) zu brauchbaren Systemen führen würde.Überraschenderweise hat es sich im Rahmen der Erfindung gezeigt, daß der Zusatz der Komponente C) zur Abmischung der Komponente A) mit der Sikkativfreien oxidativ trocknenden Alkydharzkomponente B) zu Lacküberzügen führt, die die vorstehenden Nachteile nicht aufweisen und ausgezeichnete lacktechnische Eigenschaften ergeben.

Gegenstand der vorliegenden Erfindung ist demgemäß ein Verfahren zur Herstellung von pigmentierten, lufttrocknenden Metallic-Basislacken durch Abmischen von

A) pulverige Metallplättchen enthaltenden Metallic-Basislacken auf der Grundlage physikalisch trocknender Bindemittel, die übliche lacktechnische Zusatzstoffe enthalten,

B) mehreren Farbpigmente verschiedener Tönung enthaltenden Hochglanzmischlacken auf der Grundlage oxidativ trocknender Alkydharz-Bindemittel, die gegebenenfalls geringe für derartige Hochglanzlacke übliche lacktechnische Zusatzstoffe enthalten,

die dadurch gekennzeichnet sind, daß

C) zusätzlich ein Gemisch von in Lösungsmitteln gelösten Celluloseethern und/oder -estern bzw. -halbestern und übliche für physikalisch trocknende Lacke verwendete lacktechnische Zusatzstoffe in einer solchen Menge zugemischt werden, daß die durch das Zumischen der Komponente B) verursachte Verschlechterung der lacktechnischen Eigenschaften weitgehend aufgehoben wird.

Wie vorstehend erwähnt, handelt es sich bei der Komponente B) um Hochglanzmischlacke auf der Grundlage oxidativ trocknender Alkydharz-Bindemittel, insbesondere oxidativ trocknender mittelöliger Alkydharzlacke, die keinen Zusatz an Sikkativen enthalten.

Die Komponente C) kann zusätzlich, bezogen auf 1 Gew.-Teil Celluloseether und/oder -ester und/oder Polyvinylacetale 0.2 bis 0.5 Gew.-Teile, vorzugsweise 0.25 bis 0.35 Gew.-Teile thermoplastische Polyester und/oder Acrylharze enthalten, jedoch nicht die in der Komponente A) enthaltenen pulveringen Metallplättchen, da sonst eine Nachstellung eines gewünschten Metallic-Effekts mit einem gewünschten Farbton praktisch nicht mehr möglich ist. Auch enthält die Komponente C) keine Farbpigmente. Die Komponente C) dient vielmehr dazu, die Verschlechterung der lacktechnischen Eigenschaften, die durch das Vermischen der Komponente A) und B) eintritt, weitgehend auszugleichen.

Als pulverige Metallplättchen werden die üblicherweise für Metalliclacke verwendeten Produkte eingesetzt, insbesondere Aluminiumflitter.

Als physikalisch trocknende Bindemittel der Komponente A) werden die üblicherweise für lufttrocknende Metall-Lacke verwendeten Bindemittel eingesetzt, insbesondere thermoplastische Polyester und/oder Acrylharz. Diese Bindemittel enthalten, wie nach dem Stand der Technik bekannt, vorzugsweise als weitere

EP 0 284 013 B1

Komponente Celluloseether und/oder -ester, insbesondere Celluloseacetobutyrat, Nitrocellulose und/oder Polyvinylacetale, wie Polyvinylbutyral oder ähnlich physikalisch trocknende thermoplastische Bindemittel. Bevorzugt entfallen auf 1 Gew.-Teil thermoplastischer Polyester und/oder Acrylatharz 1 bis 2 Gew.-Teile, vorzugsweise 1.4 bis 1.6 Gew.-Teile Celluloseether und/oder -ester und/oder Polyvinylacetale. Es wird insofern auf den umfangreichen Stand der Technik verwiesen.

Außerdem enthält die Komponente A) übliche lacktechnische Zusatzstoffe, wie sie nach dem Stand der Technik in Lacken auf der vorstehend definierten Bindemittelbasis üblicherweise enthalten sind. Hierbei handelt es sich insbesondere um thioxotropierend wirkende Mittel wie feinverteiltes Siliciumdioxid oder natürliche Kieselgele (Montmorillonit), Wachse, insbesondere Polyethylenwachse, Additive wie Verlaufsmittel, z.B. Silikone, Silikonöle, Ketoxime, Naphthenate, Octoate, Fettsäuresulfonate.

Bei der Komponente B) handelt es sich um ein übliches Alkydharz, insbesondere ein mittelöliges Alkydharz, wie es in der Literatur beschrieben wird, bzw. wie es handelsüblich ist. Ein derartiges Harz ist beispielsweise erhältlich aus Phthalsäureanhydrid und Polyol, wie z.N. Pentaerythrit und trocknenden pflanzlichen Öl- und/oder Fettsäuren, mit einem Ölgehalt von 45 - 55%. Es kommen hauptsächlich Öl- bzw. Fettsäuren zum Einsatz, wie z.B. solche, die sich von Leinöl, Sonneblumenöl oder Sojaöl ableiten. Diese Alkydharze trocknen durch Sauerstoffaufnahme in Form einer radikalischen Polymerisation. Die Reaktion kann in üblicher Weise durch Zusatz von üblichen für diesen Zweck geeigneten Katalysatoren, wie Metallsalzen, beschleunigt werden, so daß sich ein trockener harter und glänzender Film bildet.

Es ist außerordentlich überraschend, daß dann, wenn man gemäß dem Verfahren der vorliegenden Erfindung die Komponenten A) und B) mit einer an sich für die Komponente B) überhöhten Menge an lacktechnischen Zusatzstoffen vermischt, in völlig unerwarteter Weise Lacke erhalten werden, die ausgezeichnete Eigenschaften als Metallic-Basislacke besitzen.

Die Komponente A) enthalten auf 100 Gew.-Teile im allgemeinen etwa 10 bis 30 Gew.-Teile Bindemittel, 0.05 bis 2 Gew.-Teile Wachse, 0.1 bis 3 Gew.-Teile thixotropierend wirkende Mittel (Siliciumdioxid und Bentonit, vorzugsweise beide zu etwa gleichen Teilen) und 0.1 bis 1.5 Gew.-Teile sonstige Additive. Der Rest besteht aus Metallplättchen und üblichen Lösungsmitteln wie Estern (z.B. Butylacetat usw.) und aromatischen Lösungsmittel (z.B. Xylol usw.).

Bevorzugt enthalten die Komponenten A) mindestens 15 Gew.-Teile und höchstens 25 Gew.-Teile Bindemittel, mindestens 0.1 Gew.-Teile und höchstens 1 Gew.-Teil Wachse, mindestens 0.5 Gew.-Teile und höchstens 1.5 Gew.-Teile thixotropierend wirkende Zusatzstoffe und mindestens 0.4 Gew.-Teile und höchstens 1 Gew.-Teile sonstige Additive.

Besonders beovzurgt enthalten die Komponenten A) mindestens 19 Gew.-Teile und höchstens 21 Gew.-Teile Bindemittel, mindestens 0.1 Gew.-Teile und höchstens 0.2 Gew.-Teile Wachs, mindestens 0.6 Gew.-Teile und höchstens 0.9 Gew.-Teule thixotropierend wirkende Zusatzstoffe und mindestens 0.5 Gew.-Teile und höchstens 0.7 Gew.-Teile sonstige Additive.

Die Komponenten B) enthalten auf 100 Gew.-Teile vorzugsweise 30 bis 50 Gew.-Teile oxidativ trocknendes Alkydharz-Bindemittel, in der Regel keine Wachse, und 0.1 bis 1.5 Gew.-Teile Additive. Bezogen auf die Menge an Bindemittel liegen also die Zusatzstoffe maximal in etwa der halben Menge vor wie bei den Komponenten A). Der restliche Anteil bis zu 100 Gew.-Teilen sind Pigmente und Lösungsmittel.

Bevorzugt enthalten die Komponenten B) mindestens 35 Gew.-Teile und höchstens 45 Gew.-Teile Bindemittel, mindestens 0.05 Gew.-Teile und höchstens 0.3 Gew.-Teile thixotropierend wirkende Zusatzstoffe und mindestens 0.4 Gew.-Teile und höchstens 1 Gew.-Teil sonstige Additive.

Besonders bevorzugt enthalten die Komponenten B) mindestens 38 Gew.-Teile und höchstens 44 Gew.-Teile Bindemittel, mindestens 0.07 Gew.-Teile und höchstens 0.1 Gew.-Teile thixotropierend wirkende Zusatzstoffe und mindestens 0.6 Gew.-Teile und höchstens 0.7 Gew.-Teile sonstige Additive.

Die Komponente C) enthält auf 100 Gew.-Teile etwa 10 bis 20 Gew.-Teile Celluloseether und/oder -ester und/oder Polyvinylacetale und nur geringe Mengen, bevorzugt bezogen auf 1 Gew.-Teil Celluloseether und/oder -ester und/oder Polyvinylacetale 0.2 bis 0.5 Gew.-Teile, besonders bevorzugt mindestens 0.25 und höchstens 0.35 Gew.-Teile thermoplastische Polyester oder Acrylharze. Sie enthält weiterhin etwa 0.05 bis 2 Gew.-Teile Wachse, 0.1 bis 4 Gew.-Teile thixotropierend wirkende Zusatzstoffe und 0.1 bis 2.5 Gew.-Teile sonstige Additive. Zweckmäßig sind die Bestandteile der Komponente C) die gleichen, wie sie auch in den Komponenten A) enthalten sind.

Bevorzugt enthält die Komponente C) mindestens 12 Gew.-Teile und höchstens 18 Gew.-Teile Bindemittel, mindestens 0.08 Gew.-Teile und höchstens 1 Gew.-Teil Wachs, mindestens 0.5 Gew.-Teile und höchstens 1.5 Gew.-Teile thixotropierend wirkende Zusatzstoffe und mindestens 1 Gew.-Teil und höchstens 2 Gew.-Teile sonstige Additive.

Besonders bevorzugt enthält die Komponente C) mindestens 13 Gew.-Teile und höchstens 15 Gew.-Teile Bindemittel, mindestens 0.1 Gew.-Teile und höchstens 0.2 Gew.-Teile Wachs, mindestens 08. Gew.-

4

Teile und höchstens 1.2 Gew.-Teile thixotropierend wirkende Zusatzstoffe und mindestens 1.5 Gew.-Teile und höchstens 1.8 Gew.-Teile sonstige Additive.

Im übrigen besteht die Komponente C)aus Lösungsmitteln, die zweckmäßig die gleichen wie in den Komponenten A) sind.

Die Komponenten A) und B) können in weisen Verhältnissen vermischt werden, z.B. können zu 100 Teilen Komponenten A) 1 Teil bis 900 Teile Komponenten B) gegeben werden. Eine merkliche Verschlechterung der lacktechnischen Eigenschaften tritt ohne Zusatz der Komponente C) im allgemeinen jedoch erst dann ein,wenn auf 100 Gew.-Teile Komponenten A) mehr als etwa 5 Gew.-Teile Komponenten B) gegeben werden.

Gemäß der vorliegenden Erfindung werden für jedes in der Mischung eingesetzte Gewichtsteil der Komponenten B) bevorzugt 1 bis 1.5 Gew.-Teile insbesondere 1.5 Gew.-Teile der Komponenten C) zugemischt.Auf diese Weise ist es bevorzugt, wenn in der Mischrezeptur der Komponenten A), B) und C) der Alkydharzanteil , bzw. die Komponenten B) auf 37.5% eingestellt wird.

Durch die vorliegende Erfindung wird somit ein Verfahren zur Herstellung pigmentierter lufttrocknender Metallic-Basislacke bereitgestellt, das zahlreiche Vorteile aufweist. So entfällt der Sikkativzusatz, der normalerweise für Alkydharz-Mischlacksysteme in Metallic-Basislacken erforderlich ist. Nachteile, wie Versprödung, Mattwerden und Rißbildung bleiben aus. Die Verarbeitung ist sehr günstig; die Verspritzbarkeit ist technisch einwandfrei. Der Metallic-Effektflop entspricht den Anforderungen der Serienlackierung. Es ist jedoch auch eine Ausbesserung der gängigen Kraftfahrzeug-Metallic-Zweischichtfarbtöne möglich. Ein mehrfaches Ausbessern ohne Kräuseln und Hochziehen wird dadurch ermöglicht. Es verschwinden die Wolkenbildung,der graue Effekt, es entstehen Helligkeit,Brillanz und Flop, die bei der Zweischichtlackierung üblich sind. Die hergestellten Lacke eignen sich somit besonders gut für Reparaturzwecke. Außerdem löst die Klarschicht den Basislack nicht stark an, so daß ein Vermischen der Schichten vermieden wird. Der oxidativ wirkende Charakter der Alkydharz-Mischlacke tritt in den Hintergrund. Es wird eine gute Filmhärte erreicht. Außerdem sind kurze Zwischenablüftzeiten von etwa 15 Minuten möglich, so daß ein schnelles Überarbeiten mit Klarlack möglich ist. Die erhaltenen Lacküberzüge sind wetter- und rißbeständig.

BEISPIELE:

(Komponente A) )

| | | |
|---|---|---|
| 6.0 | Gew.-Teile | handelsübliche Non leafing Aluminium-Paste |
| 6.0 | Gew.-Teile | Xylol |
| 8.0 | Gew.-Teile | handelsübliches thermoplastisches Acrylatharz 65%ig gelöst in Xylol/Butanol 4:1 |
| 55.0 | Gew.-Teile | handelsübliche CAB-Lösung (Celluloseacetobutyrat) 15%ig gelöst in Butylacetat |
| 2.0 | Gew.-Teile | Polyethylenwachspaste 6%ig auf Perlmühle angetrieben in thermoplastischem Acrylharz und Xylol |
| 12.0 | Gew.-Teile | Montmorillonit-Siliciumdioxid-Paste (Bentone-Aerosilpaste) 6%ig auf Perlmühle angetrieben in thermoplastischem Acrylharz und Xylol |
| 1.2 | Gew.-Teile | handelsübliches Netz- und Dispergiermittel auf Basis hochmolekularer Polycarbonsäure und Silikonharz 50%ig in Xylol |
| 9.8 | Gew.-Teile | Butylacetat |
| 100.0 | Gew.-Teile | |

(Komponente B))

|         |            |                                              |
|---------|------------|----------------------------------------------|
| 4.0     | Gew.-Teile | handelsübliches Phthalocyaninblau            |
| 1.0     | Gew.-Teile | Antihautmittel handelsübliches Ketoxim       |
| 75.0    | Gew.-Teile | oxidativ trocknendes Alkydharz 50%ig         |
|         |            | in Testbenzin/Xylol 4:1                      |

(Es handelt sich um ein mittelöliges
Alkydharz erhältlich aus:

|         |                                              |
|---------|----------------------------------------------|
| 20 - 25% | Phthalsäureanhydrid                         |
| 10 - 15% | Butylbenzoesäure                            |
| 25 - 30% | Fettsäure mit hohem Anteil konjugierter Linolsäure |
| 10 - 15% | Linolsäure                                  |
| 20 - 25% | Pentaerythrit)                              |

|         |            |                                              |
|---------|------------|----------------------------------------------|
| 1.0     | Gew.-Teil  | Silikonöllösung 10%ig in Xylol               |
| 1.0     | Gew.-Teil  | Ca-naphthenat 50%ig in Xylol                 |
| 11.0    | Gew.-Teile | Testbenzin (K 30)                            |
| 7.0     | Gew.-Teile | Xylol                                        |
| 100.0   | Gew.-Teile |                                              |

(Komponente C))

|         |            |                                              |
|---------|------------|----------------------------------------------|
| 11.0    | Gew.-Teile | handelsübliches CAB                          |
| 60.0    | Gew.-Teile | Butylacetat                                  |
| 15.0    | Gew.-Teile | Montmorillonit-Siliciumdioxid-Paste (Bentone-Aerosilpaste)6%ig auf Perlmühle angerieben in thermoplastischem Acrylharz Xylol |
| 2.5     | Gew.-Teile | Polyethylenpaste 6%ig auf Perlmühle angetrieben in thermoplastischem Acrylharz und Xylol |
| 1.5     | Gew.-Teile | handelsübliches Netz- und Dispergiermittel auf Basis hochmolekulater Polycarbonsäure und Silikonharz 50%ig in Xylol |

7

```
  2.0  Gew.-Teile  Methylethylketoxim 50%ig in Xylol
  8.0  Gew.-Teile  Butylacetat
100.0  Gew.-Teile
■■■■■■■■■■■■■■■
```

Durch Abmischen der vorstehend bereiteten Komponenten A),B) und C) in folgenden Gewichtsanteilen:

```
 25.0  Gew.-Teile  Komponente A)
 30.0  Gew.-Teile  Komponente B)
 45.0  Gew.-Teile  Komponente C)
100.0  Gew.-Teile
■■■■■■■■■■■■■■■
```

erhält man einen lufttrocknenden Metallic-Basislack, der bereits nach kurzer Zeit, nämlich nach ca. 15 Minuten mit einem Klarlack überlackiert werden kann. Der erhaltene Lacküberzug ist hochglänzend und weist einen einwandfreien Metallic-Effekt auf.

VERGLEICHSVERSUCH

Vermischt man die vorstehenden Komponenten A) und B) unter Zusatz eines handelsüblichen Sikkatives, ohne Zusatz der Komponente C), so erhält man einen Lacküberzug mit grauem schmutzigem Metalleffekt und eine starke Wolkenbildung. Der Klarlack-Auftrag kann erst nach einer Zwischenablüftzeit von 3 bis 4 Stunden erfolgen. Es tritt ein unerwünschter Kräuselungseffekt auf.

**Patentansprüche**

1. Verfahren zur Herstellung von pigmentierten, lufttrocknenden Metallic-Basislacken durch Abmischen von

A) pulverige Metallplättchen enthaltenden Metallic-Basislacken auf der Grundlage physikalisch trocknender Bindemittel, die übliche lacktechnische Zusatzstoffe enthalten,
B) mehreren Farbpigmente verschiedener Tönung enthaltenden Hochglanz-Mischlacken auf der Grundlage oxidativ trocknender Alkydharz-Bindemittel, die gegebenenfalls geringe für derartige Hochglanzlacke übliche lacktechnische Zusatzstoffe enthalten,
**dadurch gekennzeichnet,**

C) zusätzlich ein Gemisch von in Lösungsmitteln gelösten Celluloseethern und/oder -estern bzw. -halbestern und übliche für physikalisch trocknende Lacke verwendete lacktechnische Zusatzstoffe in einer solchen Menge zugemischt werden, daß die durch das Zumischen der Komponenten B) verursachte Verschlechterung der lacktechnischen Eigenschaften weitgehend aufgehoben wird.

2. Verfahren nach Anspruch 1, dadurch gekennzeichnet, daß die Komponenten A) als Bindemittel thermoplastische Polyester und/oder Acrylharze im Gemisch mit Celluloseethern und/oder -estern und/oder Polyvinylacetalen enthalten.

3. Verfahren nach Anspruch 2, dadurch gekennzeichnet, daß auf 1 Gew.-Teil thermoplastischer Polyester und/oder Acrylethern 1 bis 2 Gew.-Teile, vorzugsweise 1.4 bis 1.6 Gew.-Teile Celluloseether entfallen.

4. Verfahren nach einem oder mehreren der Ansprüche 1 bis 4, dadurch gekennzeichnet, daß die Komponente C) bezogen auf 1 Gew.-Teil Celluloseether, 0.2 bis 0.5 Gew.-Teile, vorzugsweise 0.25 bis 0.35 Gew.-Teile thermoplastische Polyester und/oder Acrylharze enthält.

5. Verfahren nach einem oder mehreren der Ansprüche 1 bis 5, dadurch gekennzeichnet, daß für jedes in der Mischung eingesetzte Gew.-Teil der fertigen Komponente B) 1.5 Gew.-Teile der fertigen Komponente C) zugemischt werden.

6. Verwendung der nach einem der Ansprüche 1 bis 6 hergestellte Metallic-Basislacke für Reparaturlakkierungen von Metallgegenständen.

**Claims**

1. A process for the preparation of pigmented air-drying metallic basecoats by mixing

    A) metallic basecoats containing powdery metal platelets and based on physically drying binders, which contain normal lacquer additives,
    B) high-gloss mixed lacquers containing several colouring pigments of different tint and based on oxidatively drying alkyd resin binders, which optionally contain minor lacquer additives normal for such high-gloss lacquers,

    characterized in that

    C) in addition a mixture of cellulose ethers and/or esters or half-esters and normal lacquer additives used for physically drying lacquers, the components of the mixture being dissolved in solvents, is admixed in such a quantity that the deterioration of the lacquer technical properties caused by the admixing of component B) is largely cancelled out.

2. A process according to Claim 1, characterized in that the components A) contain as binders thermoplastic polyesters and/or acrylate resins mixed with cellulose ethers and/or cellulose esters and/or polyvinyl acetals.

3. A process according to Claim 2, characterized in that 1 to 2 parts by weight, preferably 1.4 to 1.6 parts by weight of cellulose ethers are used per 1 part by weight of thermoplastic polyesters and/or acrylic ethers.

4. A process according to one or more of Claims 1 to 3, characterized in that the component C) contains 0.2 to 0.5 parts by weight, preferably 0.25 to 0.35 parts by weight of thermoplastic polyesters and/or acrylic resins per 1 part by weight of cellulose ethers.

5. A process according to one or more of Claims 1 to 4, characterized in that for each part by weight of the complete component B) used in the mixture 1.5 parts by weight of the complete component C) are admixed.

6. Use of the metallic basecoat prepared according to one of Claims 1 to 5 for the refinish lacquering of metal objects.

**Revendications**

1. Procédé pour préparer des peintures à bases métalliques pigmentées et séchant à l'air, en mélangeant

    A) des peintures à bases métalliques contenant des paillettes métalliques en poudre, ces peintures étant à base de liants séchant par voie physique, qui contiennent des additifs habituels dans la technique des peintures,
    B) des peintures de mélanges brillantes,comportant plusieurs pigments colorés de diverses nuances, à base de liants de résines alkydes séchant par oxydation, qui contiennent le cas échéant une faible quantité d'additifs de technique de peinture, habituels pour de telles peintures brillantes, le procédé étant caractérisé en ce que
    C) on y incorpore par mélange, en plus, un mélange d'éthers et/ou d'esters, ou de semi-esters, cellulosiques dis sous dans des solvants, et des additifs de technique de peinture utilisés habituellement pour des peintures qui sèchent par voie physique, cette incorporation se faisant en quantité telle que la détérioration des propriétés concernant la technique de peinture, provoquée par le mélange avec les composants B), soit considérablement diminuée.

2. Procédé selon la revendication 1, caractérisé en ce que les composants A) comportent comme liants des polyesters et/ou des résines acryliques thermoplastiques, en mélange avec des éthers et/ou des esters cellulosiques et/ou des acétals polyvinyliques.

3. Procédé selon la revendication 2, caractérisé en ce que, pour une partie en poids de polyesters et/ou d'éthers acryliques thermoplastiques, on utilise de 1 à 2 parties en poids, de préférence de 1,4 à 1,6 parties en poids, d'éthers cellulosiques.

4. Procédé selon l'une ou plusieurs des revendications, 1 à 3, caractérisé en ce que le composent C), pour 1 partie en poids d'éther cellulosique, comporte de 0,2 à 0,5 partie en poids, de préférence de 0,25 à 0,35 partie en poids, de polyesters et/ou de résines acryliques thermoplastiques.

5. Procédé selon l'une ou plusieurs des revendications 1 à 4, caractérisé en ce que, pour chaque partie en poids du composant B) terminé utilisé dans le mélange, on mélange 1,5 parties en poids du composant C) terminé.

6. Utilisation des peintures à bases métalliques préparées selon l'une des revendications 1 à 5, pour la peinture de réparation d'articles métalliques.